# EUROPÄISCHE PATENTSCHRIFT

(11) **EP 3 554 922 B1**
(45) Veröffentlichungstag und Bekanntmachung des Hinweises auf die Patenterteilung: **08.06.2022**
(21) Anmeldenummer: 17837850.1
(22) Anmeldetag: 08.12.2017
(51) Int. Cl.: B62D 15/02, B60W 30/06, G08G 1/16, B60W 50/00

(54) **STEUERVORRICHTUNG FÜR EIN FAHRZEUG, BREMSENSTEUERGERÄT UND VERFAHREN ZUR STEUERUNG EINES FAHRZEUGS**
CONTROLLER FOR A VEHICLE, BRAKE CONTROLLER, AND METHOD FOR CONTROLLING A VEHICLE
DISPOSITIF DE COMMANDE POUR VÉHICULE, APPAREIL DE COMMANDE DE FREINAGE ET PROCÉDÉ POUR COMMANDER UN VÉHICULE

(30) Priorität: 15.12.2016 DE 102016225111; 04.05.2017 DE 102017207483
(43) Veröffentlichungstag der Anmeldung: 23.10.2019
(73) Patentinhaber: Conti Temic microelectronic GmbH, 90411 Nürnberg (DE); Continental Teves AG & Co. OHG, 60488 Frankfurt am Main (DE)
(72) Erfinder: FEY, Wolfgang, 88131 Bodolz (DE); ZYDEK, Michael, 60529 Frankfurt (DE)
(74) Vertreter: Continental Corporation
(86) Internationale Anmeldenummer: PCT/DE2017/200131
(87) Internationale Veröffentlichungsnummer: WO 2018/108217

(56) Entgegenhaltungen:
- EP-A1- 1 950 098
- DE-A1-102005 017 359
- DE-A1-102009 014 897
- DE-A1-102011 014 699
- DE-A1-102012 213 815
- US-A1- 2012 089 294

## Beschreibung

Die vorliegende Erfindung betrifft eine Steuervorrichtung für ein Fahrzeug, ein Bremsensteuergerät sowie ein Verfahren zur Steuerung eines Fahrzeugs. Insbesondere betrifft die vorliegende Erfindung die Integration einer Steuerung für einen Parkvorgangs in ein weiteres Steuergerät eines Fahrzeugs.

### Stand der Technik

Moderne Kraftfahrzeuge verfügen heutzutage über Komfort- und Assistenzsystemen, die einem Fahrer das Führen eines Kraftfahrzeugs stark erleichtern. Zu diesen Assistenzsystemen gehören u.a. Parkassistenzsysteme. Parkassistenzsysteme unterstützen beispielsweise das Einparken des Kraftfahrzeugs in eine Parklücke. Diese Parklücke kann insbesondere parallel zu einer Fahrbahn oder quer zu einer Fahrbahn ausgerichtet sein. Die Parkassistenzsysteme umfassen einen oder mehrere Sensoren, mit denen eine Umgebung des Kraftfahrzeugs nach Hindernissen und/oder Freiräumen abgesucht wird. Für das Überwachen der Umgebung des Kraftfahrzeugs können hierbei beispielsweise Ultraschallsensoren, Radarsensoren oder optische Sensoren eingesetzt werden.

Ein Parkassistenzsystem kann daraufhin beispielsweise dem Fahrer des Kraftfahrzeugs mögliche Hindernisse in der Umgebung signalisieren. Beispielsweise kann ein akustisches Signal ausgegeben werden, welcher in Abhängigkeit von einem Abstand zwischen Kraftfahrzeug und Hindernis in Tonhöhe oder Lautstärke variiert wird. Zusätzlich oder alternativ kann ein mögliches Hindernis in der Umgebung des Kraftfahrzeugs auch mittels einer optischen Anzeige dargestellt werden.

Darüber hinaus werden moderne Kraftfahrzeuge zunehmend mit Parkassistenzsystemen ausgestattet, welche ein vollständig oder zumindest teilweise automatisches Einparken eines Fahrzeugs in eine Parklücke ermöglichen. Hierzu muss in einem ersten Schritt zunächst mittels geeigneter Sensoren, beispielsweise mittels eines Ultraschallsensors, eines Radarsensors oder eines optischen Sensors, eine geeignete Parklücke identifiziert werden.

Ist eine Parklücke erkannt, so liefert ein Parkassistenzsystem Unterstützungshinweise für einen Fahrer, wie er das Fahrzeug zu führen hat, um das Fahrzeug in die erkannte Parklücke einzuparken. Besonders komfortable Systeme sind in der Lage, einzelne oder alle hierfür notwendigen Fahrzeugsysteme selbständig zu steuern. Ein solches System wird beispielsweise als Parklenkassistenzsystem oder Parklenkassistent bezeichnet.

Parkassistenzsysteme, verfügen hierbei über mehrere Sensoren, welche die Umgebung um das Kraftfahrzeug herum erfassen, um mögliche Hindernisse zu erkennen und gegebenenfalls eine geeignete Parklücke zu detektieren. Zur Erfassung der Umgebung um das Kraftfahrzeug herum können insbesondere Ultraschallsensoren verwendet werden. Hierbei werden die Sensoren, insbesondere die Ultraschallsensoren, an ein eigenständiges Steuergerät angeschlossen, welches die Sensorsignale erfasst und auswertet. Basierend auf den ausgewerteten Sensorsignalen kann das Steuergerät ein Modell der Fahrzeugumgebung erstellen und mit weiteren separaten, eigenständigen Systemen kommunizieren, um geeignete Lenk-, Fahr- -oder Bremsmanöver auszuführen.

Hierbei wird für das Auswerten der Umgebungssensoren ein eigenständiges Steuergerät eingesetzt. Dieses eigenständige Steuergerät kommuniziert während des Parkvorgangs mit weiteren Steuergeräten.

In der US 2012/0089294 A1 wird ein Verfahren zum Unterstützen eines Kraftfahrzeugführers während eines Fahrmanövers beschrieben, bei dem die Längs- oder Querführung automatisiert durchgeführt wird und eine Trajektorie zur Durchführung des Fahrmanövers bestimmt wird und das Fahrzeug mit automatischer Steuerung entlang der Trajektorie geführt wird, während die Umgebung des Fahrzeugs während des Fahrmanövers überwacht wird. Für die Durchführung des Verfahrens werden mehrere Steuereinrichtungen eingesetzt. US 2012/089294 A1 offenbart insbesondere eine Steuervorrichtung für ein Fahrzeug, mit:
einer Steuereinrichtung, die dazu ausgelegt ist, unter Verwendung von ersten Sensordaten ein erstes fahrzeugseitiges System anzusteuern; und
einer Erfassungseinrichtung, die dazu ausgelegt ist, zweite Sensordaten von Abstandssensoren (2-i) zu empfangen.

Die EP 1 950 098 A1 weist einen Parkassistenten mit einer Anzeigeeinrichtung auf, wobei eine Zielposition basierend auf der Blickrichtung des Fahrers eingestellt werden kann.

Die DE 10 2005 017 359 A1 beschreibt ein Einparkassistenzsystem, wobei ein Einparkassistent und ein Lenkaktuator jeweils ein Steuergerät aufweisen.

Es steht ein Bedarf nach einer effizienten, zuverlässigen und kostengünstigeren Steuervorrichtung für ein Parkassistenzsystem.

### Offenbarung der Erfindung

Die vorliegende Erfindung schafft eine Steuervorrichtung für ein Fahrzeug, ein Bremsensteuergerät und ein Verfahren zur Steuerung eines Fahrzeugs mit den Merkmalen der unabhängigen Patentansprüche. Weiter vorteilhafte Ausführungsformen sind Gegenstand der abhängigen Patentansprüche.

Demgemäß ist vorgesehen:
Eine Steuervorrichtung für ein Fahrzeug mit einer Steuereinrichtung und einer Erfassungseinrichtung. Die Steuereinrichtung ist dazu ausgelegt, unter Verwendung von ersten Sensordaten ein erstes fahrzeugseitiges System anzusteuern. Die Erfassungseinrichtung ist dazu ausgelegt, zweite Sensordaten von Abstandssensoren zu empfangen. Die zweiten Sensordaten können von einem oder mehreren Abstandssensoren bereitgestellt werden. Es ist insbesondere ein Ultraschallsensor als Abstandssensor vorgesehen. In einer weiteren Ausgestaltung der Erfindung ist der Abstandssensor als Radarsensor- oder Lidarsensorsystem ausgestaltet. Die Steuereinrichtung ist ferner dazu ausgelegt, die empfangenen zweiten Sensordaten während eines Parkvorgangs des Fahrzeugs zu verarbeiten.

Die Steuereinrichtung der Steuervorrichtung verarbeitet somit sowohl Sensordaten welche in Zusammenhang mit einem ersten fahrzeugseitigen System stehen, als auch weitere Sensordaten, welche von Abstandssensoren im Zusammenhang mit einem Parkvorgang des Fahrzeugs bereitgestellt werden. Die Verarbeitung der weiteren Sensordaten von den Abstandssensoren erfolgt daher in einer Steuereinrichtung, welche primär für ein anderes fahrzeugseitiges System konzipiert ist.

Weiterhin ist vorgesehen:
Ein Bremsensteuergerät mit einer erfindungsgemäßen Steuervorrichtung.

Ferner ist vorgesehen:
Ein Verfahren zur Steuerung eines Fahrzeugs, mit einem Schritt zum Ansteuern eines ersten fahrzeugseitigen Systems mittels einer Steuereinrichtung, unter Verwendung von ersten Sensordaten. Ferner umfasst das Verfahren die Schritte des Empfangens von zweiten Sensordaten von Abstandssensoren; und
des Steuerns eines Parkvorgangs des Fahrzeugs unter Verwendung der empfangenen zweiten Sensordaten mittels der Steuereinrichtung.

### Vorteile der Erfindung

Der vorliegenden Erfindung liegt die Erkenntnis zu Grunde, dass moderne Fahrzeuge neben einem separaten System für eine Einparkhilfe noch über zahlreiche weitere Steuergeräte verfügen. Die einzelnen Steuergeräte, einschließlich dem Steuergerät für die Einparkhilfe, sind hierbei für eine fahrzeuginterne Kommunikation miteinander verbunden. Ein konventionelles Steuergerät für eine Einparkhilfe kann hierbei mit mehreren Sensoren, beispielsweise mehreren Abstandssensoren, verbunden sein, um die Umgebung um das Fahrzeug herum zu erfassen. Die Signale von diesen Sensoren werden dabei durch das Steuergerät der Einparkhilfe ausgewertet und daraufhin das Ergebnis dieser Auswertung weiteren Steuergeräten mitgeteilt. Dies erfordert eine hohe Anzahl von eigenständigen Steuergerät.

Der vorliegenden Erfindung liegt daher die Idee zu Grunde, dieser Erkenntnis Rechnung zu tragen und ein System vorzusehen, welches die Anzahl der erforderlichen Steuergeräte, insbesondere für ein Parkassistenzsystem, verringern kann. Hierzu ist es eine Idee der vorliegenden Erfindung, die Auswertung der Sensorsignale für die Erfassung der Fahrzeugumgebung nicht durch ein eigenständiges Steuergerät auszuführen, sondern vielmehr dieser Auswertung der Sensorsignale in einem Bremsensteuergerät vorzunehmen, welches ohnehin in jedem Fahrzeug vorhandenen ist.

Durch die Integration der Auswertung der Sensorsignale für die Erfassung der Fahrzeugumgebung in einem bereits existierenden Steuergerät kann somit ein separates Steuergerät für die Erfassung und Auswertung der Sensorsignale eingespart werden. Hierdurch können die Kosten für die Realisierung eines Parkassistenzsystems gesenkt werden. Außerdem ist ein Bremsensteuergerät bereits als sicherheitsrelevantes Gerät ausgelegt, so dass für die Sicherheit keine separaten, zusätzlichen Maßnahmen mehr aufgewendet werden müssen. Dies ist ermöglicht insbesondere auf eine einfache und kostengünstige Implementierung von Funktionen wie ferngesteuertes oder vollautomatisches Parken (Remote Parking und Valet Parking). Darüber hinaus stehen in die Ergebnisse der Verarbeitung der Sensorsignale und somit ein in diesem Zusammenhang generiertes Umgebungsmodell bereits in dem entsprechenden Steuergerät zur Verfügung und können somit direkt von dem entsprechenden Steuergerät weiterverarbeitet werden. Eine Übertragung zwischen einem separaten Steuergerät für die Auswertung der Sensorsignale und einem weiteren Steuergerät zur Ansteuerung von Aktoren kann daher entfallen. Hierdurch kann der Aufwand, insbesondere für eine Kommunikationsverbindung, gesenkt werden. Da die Steuerbefehle nicht über eine Schnittstelle an ein weiteres Steuergerät übertragen werden müssen, sondern die Steuerbefehle direkt innerhalb des Steuergeräts verarbeitet werden, kann die Verarbeitungsgeschwindigkeit gesteigert werden. Ferner können Fehler aufgrund einer fehlerhaften Kommunikations-verbindung vermieden werden.

Die Steuereinrichtung ist als eine Steuervorrichtung nach Automotive Safety Integrity Level D (ASIL D) ausgebildet. ASIL unterscheidet zwischen vier verschiedenen ASIL-Risikostufen A bis D, wobei ASIL D in die höchste Zuverlässigkeit und somit die geringste Ausfallwahrscheinlichkeit für ein System repräsentiert. ASIL D Systeme stellen somit Systeme mit einer besonders hohen Zuverlässigkeit dar.

Gemäß einer Ausführungsform umfasst die Steuereinrichtung ein Bremsensteuergerät. Bremsensteuergeräte sind in der Regel in nahezu jedem modernen Fahrzeug bereits vorhanden. So sind beispielsweise Steuergeräte für ein Antiblockier-system (ABS) oder ein elektronisches Stabilitätsprogramm (ESP) heutzutage in fast allen Fahrzeugen implementiert. Bremsensteuergeräte verfügen hierbei in der Regel über eine ausreichende Kapazität, so dass die Auswertung der Sensorsignalen während eines Parkvorgangs in dem Steuergerät implementiert werden kann, ohne dass die Leistungsfähigkeit des Bremsensteuergeräts überbeansprucht wird. Hierbei ist es auch vorteilhaft, dass Bremsensteuergeräte in der Regel über einen hohen Sicherheitslevel (ASIL D) verfügen. Ferner kann durch die Integration des Parkassistenzvorgangs in dem Bremsensteuergerät bei Bedarf auch sehr rasch und zuverlässig ein Bremsvorgang eingeleitet werden, um eine mögliche Gefahrensituation abzuwenden.

Gemäß einer Ausführungsform ist die Steuereinrichtung dazu ausgelegt, eine Visualisierung einer Fahrzeugumgebung unter Verwendung der empfangenen weiteren Sensordaten zu berechnen. Eine solche Visualisierung kann beispielsweise eine schematische Darstellung der Fahrzeugumgebung umfassen. Insbesondere können beispielsweise potentielle Hindernisse in der Fahrzeugumgebung während eines Einparkvorgangs visualisiert werden. Eine solche Visualisierung kann zum Beispiel mittels einer geeigneten Anzeigevorrichtung einem Benutzer angezeigt werden. Hierbei ist es gegebenenfalls auch möglich, eine solche berechnete Visualisierung mit weiteren Kamerabildern zu überlagern. Auf diese Weise kann ein Benutzer während eines Einparkvorgangs unterstützt werden.

Gemäß einer Ausführungsform ist die Steuereinrichtung dazu ausgelegt, Steuerbefehle für einen teilweise oder vollständig automatisierten Parkvorgang des Fahrzeugs zu ermitteln. Die Steuereinrichtung kann ferner dazu ausgelegt sein, die ermittelten Steuerbefehle an weitere Komponenten des Fahrzeugs zu übertragen. Zusätzlich oder alternativ können die Steuerbefehle auch direkt in der Steuereinrichtung weiterverarbeitet werden, um beispielsweise Aktoren anzusteuern, welche an die Steuereinrichtung angeschlossen sind. Auf diese Weise ist eine effiziente und sichere Steuerung eines ganz oder teilweise automatisierten Einparkvorgangs für ein Fahrzeug möglich.

Gemäß einer Ausführungsform ist die Empfangseinrichtung dazu ausgelegt, dritte Sensordaten von weiteren Sensoren zu empfangen. Ferner kann die Steuereinrichtung während des Parkvorgangs des Fahrzeugs sowohl die zweiten als auch die dritten Sensordaten verarbeiten. Bei den dritten Sensordaten kann es sich beispielsweise um einen Sensordaten von weiteren Sensoren, insbesondere beispielsweise von Radarsensoren und/oder optischen Sensoren handeln. So kann beispielsweise auch die Umgebung um das Fahrzeug herum mittels einer oder mehrerer Kameras erfasst und ausgewertet werden. Dabei können zum Beispiel aus den erfassten Kameradaten Merkmale extrahiert oder Objekte detektiert werden. Das Ergebnis einer solchen Verarbeitung kann daraufhin der Steuereinrichtung als dritte Sensordaten bereitgestellt werden. Hierdurch kann die Zuverlässigkeit während des Einparkvorgangs weiter gesteigert werden.

Gemäß einer Ausführungsform umfasst die Empfangseinrichtung Steckkontakte für einen Anschluss von Abstandssensoren, insbesondere Ultraschallsensoren. Auf diese Weise können die Ausgangssignale der Abstandssensoren direkt an der Steuervorrichtung bereitgestellt werden.

Gemäß einer Ausführungsform umfasst die Empfangseinrichtung eine Schnittstelle zu einem Kommunikationsbus. Bei diesem Kommunikationsbus kann es sich beispielsweise um ein Bussystem wie Ethernet, Flexray, CAN, LIN oder ein beliebiges bekanntes oder neuartiges Bussystem handeln. In diesem Fall können beispielsweise die Daten von den Sensoren, insbesondere den Ultraschallsensoren, auch über ein solches entsprechendes Bussystem an der Steuervorrichtung bereitgestellt werden. Hiermit können separate Anschlüsse für die Abstandssensoren an der Steuervorrichtung entfallen.

Die obigen Ausgestaltungen und Weiterbildungen lassen sich, soweit sinnvoll, beliebig miteinander kombinieren.

### Kurze Beschreibung der Zeichnungen

Die vorliegende Erfindung wird nachfolgend anhand der in den schematischen Figuren der Zeichnungen angegebenen Ausführungsbeispiele näher erläutert. Dabei zeigen:
- Figur 1:: eine schematische Darstellung einer Steuervorrichtung für ein Fahrzeug gemäß einer Ausführungsform;
- Figur 2:: eine schematische Darstellung einer Steuervorrichtung für ein Fahrzeug gemäß einer weiteren Ausführungsform; und
- Figur 3:: eine schematische Darstellung eines Ablaufdiagramms, wie es einem Verfahren zur Steuerung eines Fahrzeugs gemäß einer Ausführungsform zugrunde liegt.

### Ausführungsformen der Erfindung

In allen Figuren sind gleiche bzw. funktionsgleiche Elemente und Vorrichtungen - sofern nicht anders angegeben - mit gleichen Bezugszeichen versehen.

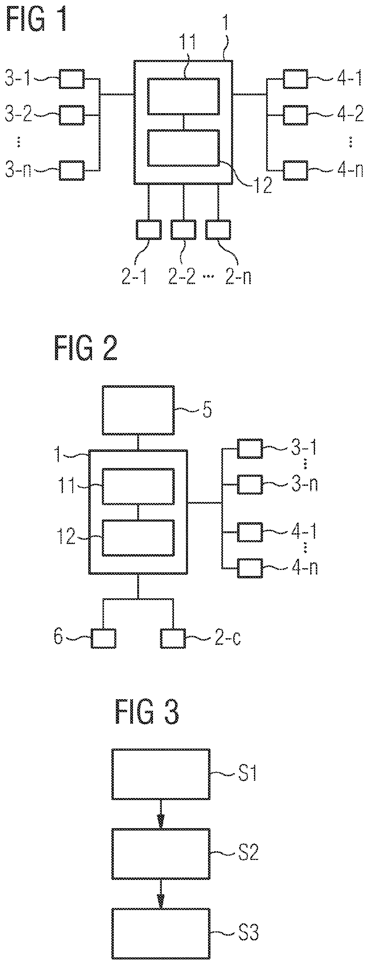

Figur 1 zeigt eine schematische Darstellung einer Steuervorrichtung 1 für ein Fahrzeug gemäß einer Ausführungsform. Bei der Steuervorrichtung 1 kann es sich beispielsweise um ein Bremsensteuergerät handeln. Darüber hinaus sind jedoch grundsätzlich auch beliebige weitere Steuergeräte eines Fahrzeugs möglich, welche in der Lage sind, die nachfolgend beschriebenen zusätzlichen Aufgaben mit auszuführen. So kann es sich bei der Steuervorrichtung 1 beispielsweise auch um eine Steuervorrichtung für die Lenkung des Fahrzeugs oder eine Steuervorrichtung für ein Getriebe des Fahrzeugs oder eine beliebige weitere Steuervorrichtung des Fahrzeugs handeln.

Um eine ausreichende Zuverlässigkeit der nachfolgend beschriebenen Operationen zu gewährleisten, kann für die Steuervorrichtung 1 eine Steuervorrichtung gewählt werden, für welche eine vorgegebene Anforderung für die Zuverlässigkeit bzw. eine vorgegebene Sicherheitsanforderungen gegeben ist. So kann zum Beispiel für die Steuervorrichtung 1 eine Steuervorrichtung gewählt werden, welche mindestens einen vorgegebenen Automotive Safety Integrity Level (ASIL) erfüllt. So kann für die Steuervorrichtung 1 beispielsweise eine Steuervorrichtung gewählt werden, welche die Anforderungen gemäß ASIL D erfüllt. Gegebenenfalls ist auch eine Steuervorrichtung 1 ausreichend, welche Anforderungen gemäß einem niedrigeren Sicherheitslevel, beispielsweise ASIL C, ASIL B oder ASIL A, erfüllt. Durch die Wahl eines geeigneten Sicherheitslevel kann gewährleistet werden, dass die nachfolgend beschriebenen Operationen mit einer ausreichenden Zuverlässigkeit ausgeführt werden können.

Handelt es sich bei der Steuervorrichtung 1 beispielsweise um die Steuervorrichtung für ein Bremssystem, so kann die Steuervorrichtung 1 mit Aktoren und/oder Sensoren 4-i des Bremssystems verbunden sein. Eine solche Steuervorrichtung für ein Bremssystem ist in der Regel in jedem aktuell verfügbaren Fahrzeug vorhanden. Insbesondere können mit einer solchen Steuervorrichtung eines Bremssystems Funktionalitäten, wie zum Beispiel ein Antiblockiersystem (ABS) und/oder ein elektronisches Stabilitätsprogramm (ESP) realisiert werden.

Handelt es sich bei der Steuervorrichtung 1 nicht um eine Steuervorrichtung für ein Bremssystem, sondern um eine Steuervorrichtung für ein weiteres System, wie zum Beispiel einem Steuergerät für das Motormanagement, zur Ansteuerung der Lenkung oder eines Getriebes, so können auch in diesem Fall weitere Aktoren und/oder Sensoren 4-i an die Steuervorrichtung 1 angebunden sein.

Die Steuervorrichtung 1 kann beispielsweise eine Steuereinrichtung 11 umfassen, welche Daten von einem oder mehreren Sensoren 4-i erfasst und auswertet und hieraus Steuerbefehle für einen oder mehrere Aktoren 4-i generiert. Beispielsweise kann die Steuereinrichtung 11 in Form eines Mikroprozessors oder eines Mikroprozessorsystems implementiert werden.

Ferner kann die Steuervorrichtung 1 mit weiteren Komponenten oder weiteren Steuereinrichtungen 3-i gekoppelt werden. Auf diese Weise können die einzelnen Steuereinrichtungen miteinander Daten austauschen. Beispielsweise kann die Steuereinrichtung 1 auf diese Weise auch Steuerbefehle an in die weiteren Steuereinrichtung 3-i senden oder sich mit den weiteren Steuereinrichtungen 3-i synchronisieren. So kann beispielsweise ein Datenaustausch zwischen einem Bremsensteuergerät, den Steuergeräten für das Motormanagement, die Lenkung und/oder das Getriebe erfolgen.

Weiterhin ist in der Steuervorrichtung 1 eine Empfangseinrichtung 12 vorgesehen. Dieser Empfangsvorrichtung 12 ist mit einem oder mehreren Abstandssensoren 2-i gekoppelt. Bei den Abstandssensoren 2-i kann es sich beispielsweise um Ultraschallsensoren handeln, welche die Umgebung um ein Fahrzeug herum erfassen. Derartige Ultraschallsensoren 2-i können beispielsweise in den Stoßfänger eines Fahrzeugs integriert sein, um Gegenstände oder Hindernisse hinter einem Fahrzeug, vor dem Fahrzeug oder gegebenenfalls auch zeitlich von dem Fahrzeug zu erfassen. Dabei kann mittels der Ultraschallsensoren 2-i auch einen Abstand zwischen dem Fahrzeug und einem Gegenstand oder einem Hindernis ermittelt werden. Ultraschallsensoren 2-i senden hierzu beispielsweise ein vorbestimmtes Ultraschallsignal aus und erfassen daraufhin einen an einem Gegenstand oder Hindernis reflektierten Anteil des ausgesendeten Ultraschallsignals. Da derartige Ultraschallsensoren weitgehend bekannt sind, wird auf eine nähere Beschreibung hier verzichtet. Die Abstandssensoren 2-i können auch Radarsensoren und/oder Lidarsensoren aufweisen.

Beispielsweise kann die Empfangseinrichtung 12 für jeden Abstandssensor 2-i einen separaten Anschluss aufweisen. Insbesondere ist es möglich, für jeden Ultraschallsensor 2-i einen Steckkontakt als Anschluss vorzusehen. Darüber hinaus können gegebenenfalls auch mehrere Abstandssensoren 2-i gemeinsam an einem Anschluss der Empfangseinrichtung 12 angeschlossen sein. Auf diese Weise kann eine beliebige Anzahl von Abstandssensoren 2-i an die Empfangseinrichtung 12 der Steuervorrichtung 1 angeschlossen werden. So können zum Beispiel 4, 6, 8, 12 oder auch eine davon abweichende Anzahl von Abstandssensoren 2-i an die Empfangsvorrichtung 12 der Steuervorrichtung 1 angeschlossen werden. Hierbei können beispielsweise von Abstandssensoren 2-i analoge Signale an der Empfangsvorrichtung 12 der Steuervorrichtung 1 bereitgestellt werden. Darüber hinaus ist es auch möglich, dass Ausgangssignale der Abstandssensoren 2-i vorab in digitale Signale gewandelt werden und anschließend diese digitalen Signale an der Empfangsvorrichtung 12 der Steuervorrichtung 1 bereitgestellt werden. In diesem Fall können gegebenenfalls die digitalen Signale auch über ein geeignetes Bussystem an der Empfangsvorrichtung 12 der Steuervorrichtung 1 bereitgestellt werden, wie dies im Zusammenhang mit der nachfolgenden Figur noch näher erläutert wird.

Die von den Abstandssensoren 2-i empfangenen Daten werden von der Empfangsvorrichtung 12 an die Steuereinrichtung 11 der Steuervorrichtung 1 weitergegeben. Daraufhin wertet die Steuereinrichtung 11 die Daten der Abstandssensoren 2-i aus. Insbesondere kann in der Steuereinrichtung 11 zusätzlich eine Steuerung für ein Parksystem implementiert sein, welches die Daten von den Abstandssensoren 2-i auswerten. Beispielsweise kann die Steuereinrichtung 11 unter Verwendung der von den Abstandssensoren 2-i empfangen Daten ein Modell der Umgebung um das Fahrzeug berechnen. Dieses Modell der Umgebung kann zum Beispiel eine zwei- oder dreidimensionales Modell von Gegenständen oder Hindernissen in der Umgebung des Fahrzeugs umfassen. Darüber hinaus kann das Modell auch gegebenenfalls weitere Objekte berücksichtigen, welche von weiteren Sensoren erfasst worden sind.

Basierend auf den Daten von den Abstandssensoren 2-i und gegebenenfalls einem Umgebungsmodell, welches aus den Daten der Abstandssensoren 2-i erstellt worden ist, kann die Steuereinrichtung 11 eine Funktion eines Parksystems für das Fahrzeug bereitstellen. Beispielsweise können Objekte oder Hindernisse in der Umgebung des Fahrzeugs detektiert werden. Insbesondere kann zum Beispiel an Abhängigkeit von einem Abstand zwischen dem Fahrzeug und den detektierten Objekten oder Hindernissen ein optisches und/oder akustisches Signal ausgegeben werden. Hierdurch kann ein Fahrer des Fahrzeugs auf mögliche Gefahren beim Einparken des Fahrzeugs hingewiesen werden. Zum Beispiel kann eine Visualisierung der detektierten Objekte oder Hindernisse in der Umgebung des Fahrzeugs berechnet werden. Eine solche Visualisierung kann einem Benutzer zum Beispiel auf einer Anzeigevorrichtung dargestellt werden.

Darüber hinaus kann in die Steuereinrichtung 11 der Steuervorrichtung 1 auch Steuerbefehle generieren, um einen Parkvorgang für ein Fahrzeug ganz oder teilweise zu automatisieren. Hierzu können von der Steuereinrichtung 11 der Steuervorrichtung 1 beispielsweise Steuerbefehle generiert werden, die an einen oder mehrere Aktoren 4-i oder weitere Steuergeräte 3-i des Fahrzeugs übertragen werden. Beispielsweise kann mittels solcher Steuerbefehle eine Lenkung des Fahrzeugs angesteuert werden oder das Motormanagement des Fahrzeugs beeinflusst werden, um zum Beispiel das Fahrzeug zu bewegen. Die weiteren Aktoren oder die weitere Steuergeräte 3-i des Fahrzeugs können hierbei über beliebige Verbindungen mit der Steuervorrichtung 1 verbunden werden. Insbesondere ist auch eine Verbindung mittels eines beliebigen Bussystems möglich.

Figur 2 zeigt eine schematische Darstellung einer Steuervorrichtung 1 für ein Fahrzeug gemäß einer weiteren Ausführungsform. Hierbei ist anzumerken, dass die einzelnen Merkmale der zuvor im Zusammenhang mit Figur 1 beschriebenen Steuervorrichtung 1 und der Merkmale der im nachfolgenden Zusammenhang mit Figur 2 beschriebenen Steuervorrichtung 1 beliebig miteinander kombinierbar sind. Zuvor beschriebene Merkmale der Steuervorrichtung 1 und der an die Steuervorrichtung 1 angeschlossenen Komponenten werden dabei, soweit sie sich nicht von dem zuvor beschriebenen Ausführungsbeispiel unterscheiden, nicht erneut beschrieben.

In der Steuervorrichtung 1 gemäß Figur 2 ist beispielsweise eine Anzeigevorrichtung 5 vorgesehen, auf welcher eine in der Steuereinrichtung 11 der Steuervorrichtung 1 berechnete Visualisierung dargestellt werden kann. Hierbei kann es sich beispielsweise um ein einfaches Balkendiagramm handeln, welches optisch den Abstand zwischen dem Fahrzeug und einem Objekt bzw. Hindernis in der Umgebung des Fahrzeugs darstellt. Darüber hinaus ist auch eine zwei- oder dreidimensionale schematische Darstellung von Objekten bzw. Hindernissen in der Umgebung des Fahrzeugs möglich. Insbesondere kann beispielsweise auch eine in der Steuereinrichtung 11 der Steuervorrichtung 1 berechnete Visualisierung mit Bildern von einer oder mehrerer weiteren Kameras des Fahrzeugs überlagert werden, um Objekte oder Hindernisse in der Umgebung des Fahrzeugs hervorzuheben.

Wie weiter in Figur 2 dargestellt, können die Abstandssensoren 2-i auch mittels eines beliebigen, geeigneten Bussystems ihre Daten an die Steuervorrichtung 1 übertragen. Beispielsweise kann es sich bei diesem Bussystem um ein CAN, LIN, PSI3, DSI3, ggf. auch Flexray, Ethernet oder ein beliebiges weiteres geeignetes Bussystem handeln. Diesem Fall können die von den Abstandssensoren 2-i erfassten Daten digitalisiert und als digitale Daten über das entsprechende Bussystem an die Empfangseinrichtung 12 der Steuervorrichtung 1 übertragen werden.

Weiterhin können gegebenenfalls auch Daten, insbesondere weitere Sensordaten, von weiteren Sensoren 6 erfasst und an die Steuervorrichtung ein übertragen werden. Bei diesen weiteren Sensoren 6 kann es sich beispielsweise um einen oder mehrere Radarsensoren, oder auch optische Sensoren handeln. Beispielsweise ist auch möglich, die Umgebung um das Fahrzeug herum optischen mittels einer oder mehrerer Kameras (hier nicht dargestellt) zu erfassen und diese erfassten Kameradaten zunächst in einer externen Auswerteeinrichtung (ebenfalls nicht dargestellt) zu analysieren. Hierbei können zum Beispiel Elemente wie beispielsweise Objekte, Linien oder Muster in den erfassten Kameradaten identifiziert werden. Informationen über diese identifizierten Elemente können an die Steuervorrichtung 1 übertragen werden. Beispielsweis kann eine externe Auswerteeinrichtung über CAN, Flexray, Ethernet oder ein anderes geeignetes Bussystem angebunden sein.

Daraufhin kann die Steuereinrichtung 11 der Steuervorrichtung 1 diese Informationen über die weiteren identifizierten Elemente mit auswerten. Beispielsweise können die identifizierten Elemente Linien in der Umgebung des Fahrzeugs umfassen, welche zum Beispiel Markierungen von möglichen Parkpositionen darstellen. Darüber hinaus können auch weitere Kennzeichnungen erfasst werden, die zum Beispiel Einschränkungen oder Verbote für mögliche Parkpositionen darstellen. Auch können zum Beispiel Schilder detektiert und/oder identifiziert werden, welche Hinweise auf Verbote oder erlaubte Parkpositionen repräsentieren. Diese und gegebenenfalls auch weitere Informationen, welche aus den erfassten Bilddaten extrahiert werden, können ebenfalls der Steuereinrichtung 11 der Steuervorrichtung 1 bereitgestellt werden und mit in die Weiterverarbeitung einbezogen werden.

Auf diese Weise kann beispielsweise eine geeignete Visualisierung generiert werden, welche auf der Anzeigevorrichtung 5 einem Benutzer dargestellt wird. Diese Signalisierung kann somit gegebenenfalls neben möglichen Objekten und Hindernissen in der Umgebung des Fahrzeugs auch Hinweise über potentielle Parkpositionen oder mögliche Verbote von Parkpositionen in der Umgebung des Fahrzeugs umfassen. Darüber hinaus können auch bei einem ganz oder teilweise automatisierten Parkvorgang diese Informationen über mögliche Verbote oder potentielle Parkpositionen mit einbezogen werden. Auf diese Weise kann sichergestellt werden, dass das Fahrzeug möglichst auf einer geeigneten Parkpositionen abgestellt wird. Bei einem ganz oder teilweise automatisierten Parkvorgang erkannte die Steuereinrichtung 11 der Steuervorrichtung 1 entsprechend Steuerbefehle für weitere Steuergeräte 3-i oder weitere Aktoren 4-i generieren, so dass das Fahrzeug vollständig automatisch in eine geeignete Parkpositionen fährt, oder zumindest der Fahrer des Fahrzeugs beim Navigieren in eine geeignete Parkpositionen unterstützt wird. Gegebenenfalls können, wie in Figur 2 dargestellt hierbei die weiteren Steuergeräte 3-i und die weiteren Komponenten 4-i des Bremssystems auch über eine gemeinsames Bussystem mit der Steuervorrichtung 1 gekoppelt sein. Selbstverständlich können die weitere Steuergeräte 3-i und die weiteren Komponenten 4-i des Bremssystems auch über separate Bussysteme mit der Steuervorrichtung 1 gekoppelt werden.

Figur 3 zeigt eine schematische Darstellung eines Ablaufdiagramms, wie es einem Verfahren zum Steuern eines Fahrzeugs gemäß einer Ausführungsform zugrunde liegt. In Schritt S1 erfolgt ein Ansteuern eines ersten fahrzeugseitigen Systems mittels einer Steuereinrichtung 11 unter Verwendung von ersten Sensordaten. Diese ersten Sensordaten können beispielsweise von einem oder mehreren ersten Sensoren 4-i stammen. Insbesondere kann beispielsweise ein Bremssystem eines Fahrzeugs mittels eines Bremsensteuergeräts unter Verwendung von geeigneten Sensordaten, wie zum Beispiel Radsensoren etc. gesteuert werden.

In Schritt S2 werden ferner zweite Sensordaten von Abstandssensoren 2-i empfangen. Hierbei kann es sich insbesondere um Ultraschallsensoren eines Parksystems für ein Fahrzeug handeln. Derartige Ultraschallsensoren 2-i können beispielsweise in Stoßfänger eines Fahrzeugs integriert sein.

In Schritt S3 wird daraufhin ein Parkvorgang des Fahrzeugs unter Verwendung der empfangenen zweiten Sensordaten mittels der Steuereinrichtung 11 gesteuert. Mit anderen Worten, es wird hierbei die Auswertung von Sensordaten eines Parksystems in ein Steuergerät eines Bremssystems integriert. Eine separates Steuergerät für die Auswertung von Sensordaten, insbesondere von Daten von Ultraschallsensoren 2-i, für eine Parksystem ist daher nicht erforderlich. hierbei können grundsätzlich die Verarbeitungsschritte für die Bremsensteuerung, wie zum Beispiel das Auswerten der Raddrehzahlsensoren auf der einen Seite und das Verarbeiten der Signale von den Sensoren für die Parkfunktion, wie zum Beispiel das Auswerten von Signalen von Ultraschallsensoren unabhängig voneinander, jedoch in einer gemeinsamen Hardware implementiert werden. Die Parkfunktion und die hierfür erforderliche Hardware für die Parkfunktion sind in diesem Fall zwar im Bremsensteuergerät integriert, laufen jedoch vollständig unabhängig von den Funktionen für die Steuerung der Bremsen. Mit anderen Worten, er wird eine Art "virtuelles Steuergerät" implementiert, in welchen die Bremse genauso angesteuert wird, als wenn die Bremse separat angesteuert wird.

Zusammenfassend betrifft die vorliegende Erfindung die Integration von Funktionalitäten eines Parksystems eines Fahrzeugs in einem weiteren Steuergerät des Fahrzeugs. Insbesondere kann eine Auswertung von Sensorsignalen von Ultraschallsensoren eines Parksystems durch ein bereits in einem Fahrzeug vorhandenes Steuergerät mit übernommen werden. Die entsprechenden Sensordaten der Ultraschallsensoren werden hierbei direkt in dem entsprechenden Steuergerät bereitgestellt. Beispielsweise kann die Auswertung von Sensorsignalen, die zum Beispiel von Ultraschallsensoren stammen, in einem Bremsensteuergerät eines Fahrzeugs integriert werden. Das entsprechende Steuergerät, welches die Auswertung der Sensorsignale übernimmt, führt dabei die Funktionen eines Parksystems mit aus.

## Patentansprüche

1. Steuervorrichtung (1) für ein Fahrzeug, mit:
einer Steuereinrichtung (11), die dazu ausgelegt ist, unter Verwendung von ersten Sensordaten ein erstes fahrzeugseitiges System anzusteuern; und
einer Erfassungseinrichtung (12), die dazu ausgelegt ist, zweite Sensordaten von Abstandssensoren (2-i) zu empfangen;
wobei die Steuereinrichtung (11) ferner dazu ausgelegt ist, die empfangenen zweiten Sensordaten während eines Parkvorgangs des Fahrzeugs zu verarbeiten, und
wobei die Steuereinrichtung nach Automotive Safety Integrity Level D, ASIL D, ausgebildet ist.

2. Steuervorrichtung (1) nach Anspruch 1, wobei die Steuereinrichtung (11) ein Bremsensteuergerät umfasst.

3. Steuervorrichtung (1) nach Anspruch 1 oder 2, wobei die Steuereinrichtung (11) dazu ausgelegt ist, eine Visualisierung einer Fahrzeugumgebung unter Verwendung der empfangenen weiteren Sensordaten zu berechnen.

4. Steuervorrichtung (1) nach einem der Ansprüche 1 bis 3, wobei bei die Steuereinrichtung (11) dazu ausgelegt ist, Steuerbefehle für einen teilweise oder vollständig automatisierten Parkvorgang des Fahrzeugs zu ermitteln, und die ermittelten Steuerbefehle an weitere Komponenten (3-i) des Fahrzeugs zu übertragen.

5. Steuervorrichtung (1) nach einem der Ansprüche 1 bis 4, wobei die Empfangseinrichtung (12) dazu ausgelegt ist, dritte Sensordaten von weiteren Sensoren (6) zu empfangen, und wobei die Steuereinrichtung (11) während des Parkvorgangs des Fahrzeugs die zweiten und die dritten Sensordaten verarbeitet.

6. Steuervorrichtung (1) nach Anspruch 5, wobei die dritten Sensordaten Daten von einer Radarsensor und/oder einem optischen Sensor umfassen.

7. Steuervorrichtung (1) nach einem der Ansprüche 1 bis 6, wobei die Empfangseinrichtung (12) Steckkontakte für einen Anschluss von Abstandssensoren (2-i) umfasst.

8. Steuervorrichtung (1) nach einem der Ansprüche 1 bis 6, wobei die Empfangseinrichtung (12) eine Schnittstelle zu einem Kommunikationsbus umfasst.

9. Bremsensteuergerät mit einer Steuervorrichtung (1) nach einem der Ansprüche 1 bis 8.

10. Verfahren zur Steuerung eines Fahrzeugs, mit den Schritten:
Ansteuern (S1) eines ersten fahrzeugseitigen Systems mittels einer Steuereinrichtung (11), unter Verwendung von ersten Sensordaten, wobei die Steuereinrichtung nach Automotive Safety Integrity Level D, ASIL D, ausgebildet ist;
Empfangen (S2) von zweiten Sensordaten von Abstandssensoren (2-i); und
Steuern (S3) eines Parkvorgangs des Fahrzeugs unter Verwendung der empfangenen zweiten Sensordaten mittels der Steuereinrichtung (11).

## Claims

1. Control apparatus (1) for a vehicle, comprising:
a control device (11) which is designed to drive a first vehicle-side system using first sensor data; and
a detection device (12) which is designed to receive second sensor data from distance sensors (2-i);
wherein the control device (11) is further designed to process the received second sensor data during a parking operation of the vehicle; and
wherein the control device is designed in accordance with Automotive Safety Integrity Level D, ASIL D.

2. Control apparatus (1) according to Claim 1, wherein the control device (11) comprises a brake controller.

3. Control apparatus (1) according to Claim 1 or 2, wherein the control device (11) is designed to calculate a visualization of an area surrounding the vehicle using the received further sensor data.

4. Control apparatus (1) according to one of Claims 1 to 3, wherein in the control device (11) is designed to determine control commands for a partially or fully automated parking operation of the vehicle, and to transmit the determined control commands to further components (3-i) of the vehicle.

5. Control apparatus (1) according to one of Claims 1 to 4, wherein the receiving device (12) is designed to receive third sensor data from further sensors (6), and wherein the control device (11) processes the second and the third sensor data during the parking operation of the vehicle.

6. Control apparatus (1) according to Claim 5, wherein the third sensor data comprises data from a radar sensor and/or an optical sensor.

7. Control apparatus (1) according to one of Claims 1 to 6, wherein the receiving device (12) comprises plug-in contacts for connection of distance sensors (2-i).

8. Control apparatus (1) according to one of Claims 1 to 6, wherein the receiving device (12) comprises an interface to a communication bus.

9. Brake controller having a control apparatus (1) according to one of Claims 1 to 8.

10. Method for controlling a vehicle, comprising the steps of:
driving (S1) a first vehicle-side system by means of a control device (11) using first sensor data, wherein the control device is designed in accordance with Automotive Safety Integrity Level D, ASIL D;
receiving (S2) second sensor data from distance sensors (2-i); and
controlling (S3) a parking operation of the vehicle using the received second sensor data by means of the control device (11).

## Revendications

1. Dispositif de commande (1) pour un véhicule, comprenant :
un moyen de commande (11) qui est conçu pour piloter un système côté véhicule en utilisant des premières données de capteur ; et
un moyen de détection (12) qui est conçu pour recevoir des deuxièmes données de capteur provenant de capteurs de distance (2-i) ;
le moyen de commande (11) étant en outre conçu pour traiter les deuxièmes données de capteur reçues pendant une opération de stationnement du véhicule, et
le moyen de commande étant réalisé selon ASIL D (« Automotive Safety Integrity Level D », niveau d'intégrité de la sécurité automobile).

2. Dispositif de commande (1) selon la revendication 1, dans lequel le moyen de commande (11) comprend un appareil de commande de frein.

3. Dispositif de commande (1) selon la revendication 1 ou 2, dans lequel le moyen de commande (11) est conçu pour calculer une visualisation d'un environnement de véhicule en utilisant les autres données de capteur reçues.

4. Dispositif de commande (1) selon l'une quelconque des revendications 1 à 3, dans lequel le moyen de commande (11) est conçu pour déterminer des instructions de commande pour une opération de stationnement du véhicule, partiellement ou entièrement automatisée, et pour transmettre les instructions de commande déterminées à d'autres composants (3-i) du véhicule.

5. Dispositif de commande (1) selon l'une quelconque des revendications 1 à 4, dans lequel le moyen de réception (12) est conçu pour recevoir des troisièmes données de capteur provenant d'autres capteurs (6), et dans lequel le moyen de commande (11) traite les deuxièmes et troisièmes données de capteur pendant l'opération de stationnement du véhicule.

6. Dispositif de commande (1) selon la revendication 5, dans lequel les troisièmes données de capteur sont des données provenant d'un capteur radar et/ou d'un capteur optique.

7. Dispositif de commande (1) selon l'une quelconque des revendications 1 à 6, dans lequel le moyen de réception (12) comprend des fiches de contact pour la connexion de capteurs de distance (2-i).

8. Dispositif de commande (1) selon l'une quelconque des revendications 1 à 6, dans lequel le moyen de réception (12) comprend une interface avec un bus de communication.

9. Appareil de commande de frein, comprenant un dispositif de commande (1) selon l'une quelconque des revendications 1 à 8.

10. Procédé de commande d'un véhicule, comprenant les étapes consistant à :
piloter (S1) un premier système côté véhicule à l'aide d'un moyen de commande (11) en utilisant des premières données de capteur, le moyen de commande étant réalisé selon ASIL D (« Automotive Safety Integrity Level D », niveau d'intégrité de la sécurité automobile) ;
recevoir (S2) des deuxièmes données de capteur provenant de capteurs de distance (2-i) ; et
commander (S3) une opération de stationnement du véhicule en utilisant les deuxièmes données de capteur reçues à l'aide du moyen de commande (11).
